# EUROPEAN PATENT SPECIFICATION

(11) **EP 2 174 299 B1**
(45) Date of publication and mention of the grant of the patent: **30.03.2011**
(21) Application number: 08760693.5
(22) Date of filing: 06.06.2008
(51) Int. Cl.: G06T 17/00, G11B 27/02, G06T 11/00, H04N 5/262

(54) **METHOD AND SYSTEM FOR PRODUCING A SEQUENCE OF VIEWS**
VERFAHREN UND SYSTEM ZUM ERZEUGEN EINER SEQUENZ VON ANSICHTEN
PROCÉDÉ ET SYSTÈME POUR PRODUIRE UNE SÉQUENCE DE VUES

(30) Priority: 07.06.2007 US 810839
(43) Date of publication of application: 14.04.2010
(73) Proprietor: Grundy UFA TV Produktions Gmbh, 14482 Potsdam-Babelsberg (DE)
(72) Inventor: FEILER, Ernst, 14612 Falkensee (DE); KNOP, Thomas, 10623 Berlin (DE); BAUR, Jonas, 12205 Berlin (DE); MARQUARDT, Jan, 14482 Potsdam (DE)
(74) Representative: Zimmermann & Partner
(86) International application number: PCT/EP2008/057124
(87) International publication number: WO 2008/148888

(56) References cited:
- EP-A- 1 304 655
- WO-A-01/33508
- WO-A-01/52526
- WO-A-2004/102343
- WO-A-2005/116934
- US-A- 5 307 456
- US-A1- 2003 001 880
- US-A1- 2003 236 577
- US-B1- 7 016 828

## Description

Herein described is a method and system for producing a sequence of views, including also a fully animated sequence of views.
US 5,307,456 describes a multi-media production and authoring system.

### BRIEF DESCRIPTION

In view of the above, a method for producing a sequence of views according to claim 1 is provided. Further aspects, advantages and features are apparent from the dependent claims, the description and the accompanying drawings.

### BRIEF DESCRIPTION OF THE DRAWINGS

A full and enabling disclosure to one of ordinary skill in the art is set forth more particularly in the remainder of the specification, including reference to the accompanying figures wherein:

Fig. 1 shows a flow diagram of a method according to an embodiment.

Fig. 2 shows a flow diagram of a detail of the method shown in Fig. 1.

Fig. 3 shows a flow diagram of a method according to another embodiment

Fig. 4 shows a flow diagram of a method according to yet another embodiment.

Fig. 5 shows a flow diagram of a method according to still another embodiment.

Fig. 6 shows a flow diagram of a method according to a further embodiment.

Fig. 7 shows a flow diagram of a method according to yet a further embodiment.

Fig. 8 shows a flow diagram of a method according to still a further embodiment.

Fig. 9 shows a flow diagram of a method according to a different embodiment.

Fig. 10 shows a flow diagram of a method according to yet another embodiment.

Fig. 11 shows a flow diagram of a method according to a further embodiment.

Fig. 12 is a diagram of a computer program according to an embodiment.

Fig. 13 is a schematic view of a system according to an embodiment.

Fig. 14 is a schematic view of a system according to another embodiment.

Fig. 15 is a schematic view of a system according to a further embodiment.

Fig. 16 is a schematic view of a system according to yet another embodiment.

### DETAILED DESCRIPTION

Reference will now be made in detail to the various embodiments, one or more examples of which are illustrated in the figures. Each example is provided by way of explanation, and is not meant as a limitation. For example, features illustrated or described as part of one embodiment can be used on or in conjunction with other embodiments to yield yet a further embodiment. It is intended that such modifications and variations are included within the present specification.

In the context of this application, the term "screenplay" should be understood as including a blueprint for a motion picture. The screenplay may be either an adaptation from a previous works such as a novel, a play, a TV-show, or a short story or may be an original work. Furthermore, it is intended that the term screenplay also includes the meaning of a "script" which may be less detailed. Typically, a screenplay differs from traditional literature conventions in that it may not involve emotion-related descriptions and other aspects of the story that are, in fact, visual within the end-product, i.e. the motion picture.

In the context of this application, the term "script language" or "scripting language" should be understood as including a computer programming language that will be interpreted command-by-command. It should be distinguished from a programming language which is converted permanently into binary executable files by means of compiling source code.

In the context of this application, the term "interpreter" should be understood as including a means of translating a computer programming language command-by-command into another computer programming language. In particular, the term "interpreter" as it is used in the present application may especially relate to a computer program which translates a first or meta script language into a second script language.

In the context of this application, the term "game engine" should be understood as including a software component of a computer or video game with real-time graphic ability. Typically, a game engine includes several components like a rendering engine, also called a "renderer", for rendering 2D or 3D graphics in real-time. Typically, a game engine also includes an animation engine which is adapted to create the illusion of movement of an animated object. Furthermore, a game engine may include a physics engine which simulates Newtonian (or other) physics models so that simulated objects behave like obeying the laws of physics. In particular, physics engines may include a collision detection and, optionally, also a collision response functionality to handle collisions between simulated objects. Typically, the game engine also includes a scene graph which is a logical and/or spatial representation of a graphical scene. For example, a scene graph may be a collection of nodes in a graph or tree structure representing entities or objects in the scene. It should be understood by those skilled in the art that the above list of game engine elements is not exhaustive and further elements may be included. Furthermore, the term "real time 3D engine" or "real time 3D game engine" should be understood as including a game engine capable of real-time animation and rendering of 3D objects.

In the context of this application, the term "animation asset" should be understood as including a predefined animated sequence. For example, an animated trailer for a TV show, a falling glass, a character getting out of bed, etc. may be stored as predefined animation assets which can be triggered at a desired moment. The animation assets may be saved as complete graphical information of the animated sequence or only as a time sequence of animation variables (so-called "avars") for the animated object, e.g. a character. Furthermore, an animation asset may also include information gathered by a motion capturing equipment.

In the context of this application, the term "motion picture production device" should be understood as including a device which is used in the production of videos, films, TV serials, TV shows, internet serials, mobile serials etc. In particular, the term "motion picture production device" may relate to any hardware or software component used in the production of the aforementioned audio-visual products. In particular, the term relates to cameras, microphones, lighting consoles and robot arms as well as to software components like game engines for producing animated sequences.

In the context of this application, the term "computer-generated imagery" should be understood as including application of computer graphics for example to special effects in motion pictures, TV programs, commercials, simulators, video games or the like.

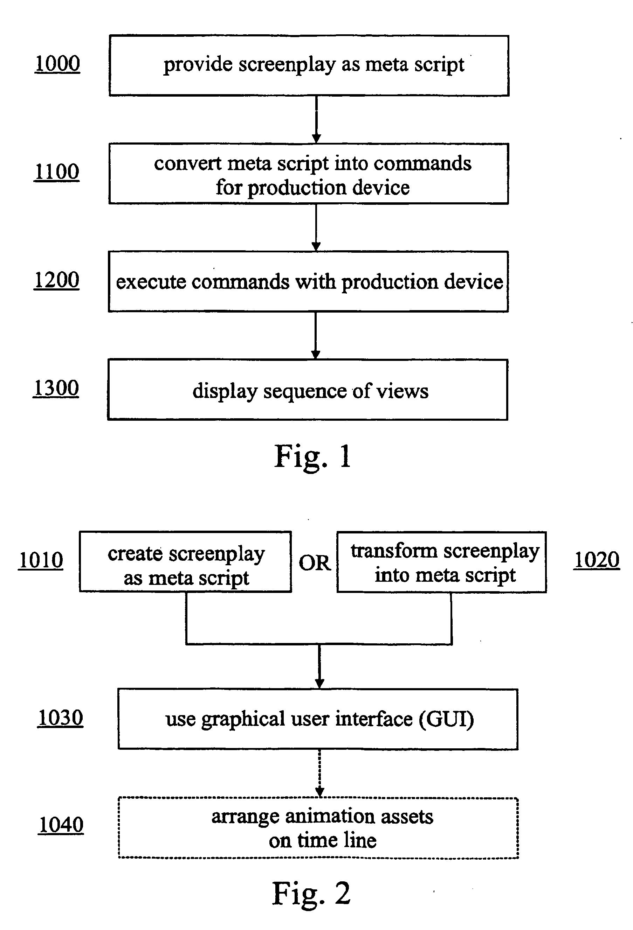

Fig. 1 shows a flow diagram of a method for producing a sequence of views according to an embodiment. In a first step 1000 of the method, a screenplay is provided as an initial meta script in a meta script language for a computer. In other words, the screenplay is not provided in a conventional form on paper specifying the dialogues and action in conventional writing of human language but in an artificial computer language. Typically, the meta script language will be specifically designed for the present application so that the conventional instructions known from conventional screenplays can be easily transformed into or expressed in the meta script computer language. However, the meta script language also contains specific computer-related commands since the meta script language is designed for being executed on a computer. Thus, the meta script language is different from conventional language at least in this respect.

In a next step 1100, the initial meta script is converted into commands for controlling at least one motion picture production device. Typically, the conversion is done by an interpreter which translates the meta script language command-by-command into control commands for the production device. In this context, it will be understood by those skilled in the art that the control commands may themselves be commands of a script language. However, such a script language is on a lower level than the script language in which the screenplay is provided. Accordingly, the term "meta" specifies that the meta script language in which the screenplay is provided is a higher-level language compared to the language in which it is translated. An example for such a motion picture production device may be at least one of a camera, a robot arm, a lighting console, a spotlight, a sound mixer, a video server, a video hard disc system. Typically, any of the aforementioned production devices has a computer interface so that it can be remotely controlled by a computer. Typically, there will exist different command sets for different production devices. For example, the command set for a camera or a sound mixer will be more complex than the command set for a spotlight. Therefore, it is intended that the interpreter is able to convert the meta script into various languages or command sets for different production devices. Thus, the interpreter can translate also complex instructions like "camera zoom on main actor and soften light" simultaneously into the different command sets for the camera and the spotlight. According to other embodiments, the motion picture production device includes a computer-generated imagery (CGI) device. For example, such a CGI device may be a real time 3D engine (RT3DE). In this case, the initial meta script, or at least the part relating to CGI, will be converted into commands of a RT3DE script language, i.e. into the script language of the game engine.

In the next step 1200, the converted commands are executed with said at least one motion picture production device. For example, instructions contained in the screenplay, e.g. "camera zoom on face of main character" or "soft blue light", are then realized by the production device, camera or lighting console in the above examples, due to the control commands sent via the interface. According to some embodiments, not only a single but two or more production devices are controlled simultaneously. For example, a camera, a robot arm, a lighting console, a spotlight, a sound mixer, a video server, a video hard disc system may be simultaneously controlled to execute the instructions contained in the meta script. Furthermore, also a combination of controlling a "real" camera and controlling an animated scenery or background can be carried out by the present method. For example, real actors may move within a bluescreen setup while the scenery is provided by a CGI device, e.g. a 3D game engine.

In a final step 1300, a sequence of views generated by the above method is displayed in real time on a display device. In one embodiment, the display device is a screen of a director so that he can watch the motion picture and, e.g., instruct actors, cameramen or the like. In another embodiment, the display device is a TV set or a computer located in the home of a viewer. In this embodiment, the sequence of views produced by the above described method is transmitted to the TV set or the computer via broadcasting, internet or similar means. It will be understood by those skilled in the art that the sequence of views may be displayed not only on a single display device but simultaneously on a larger number of display devices. For example, millions of viewers may be reached when broadcasting the produced sequence of views. According to another embodiment, not only the director but also a cameraman, a lighting technician or other staff members of a production team may each have their own display device for displaying the sequence of views in real time.

According to a further embodiment, the sequence of views is a fully animated sequence of views. For example, the production device may be a real time 3D game engine (RT3DE) for producing fully animated views. In this embodiment, the meta script is converted into commands of the RT3DE script language which are then executed on the RT3DE to produce the sequence of views. The fully animated views produced by the RT3DE are then displayed on a display device. Thus, a director watching the views on the display device may check whether the produced motion picture is in order or changes have to be made. As explained above, also other members of the production team may each have their own display device to check the fully animated sequence of views produced by the above-described method.

The above described method can be used to produce any desired sequence of views for any desired visual or audio-visual medium. However, this method is useful for producing a TV serial, an internet serial, or a mobile serial. Furthermore, the above described method is also useful for producing commercials, animated advertisements or the like. It will be understood by those skilled in the art that the above list of applications is not exhaustive and other applications of the production methods described herein are alto considered to be within the scope of the appended claims.

The above described method enables efficient production of motion pictures. Providing the screenplay in a meta script language together with the computerized translation of the meta script into commands selected from one or more computer languages for directly controlling production devices achieves an at least partial automation of motion picture production. For example, in conventional motion picture production the screenplay had to be copied and distributed to the director, the cameramen, the lighting technicians, the actors and, in principle, almost every member of the production staff.

Fig. 2 shows a flow diagram of a detail of the method shown in Fig. 1. Therein, it is shown how the screenplay can be provided as a meta script in step 1000. According to a first embodiment, the screenplay is directly created as a meta script in step 1010. For example, instead of writing down a conventional screenplay an author may directly create the screenplay in the meta script language. In the process of creating the screenplay, the author may use a command line-oriented editor for typing in the meta script commands. Additionally or alternatively, the author may use a graphical user interface (GUI) which allows him to arrange the action and dialogues of the screenplay in a convenient manner, e.g. by dragging and dropping of icons or the like. Of course, also a combination of a GUI and an editor may be used. For example, actions may be represented by icons and dragged and dropped on the desktop while dialogues are typed in. In another embodiment which is shown in step 1020, the screenplay is created in a conventional manner and subsequently transformed into a meta script. For example, the transformation may be accomplished by using a command line-oriented editor for typing in meta script commands. Additionally or alternatively, transforming the screenplay into a meta script may also be accomplished by using a graphical user interface. In particular, the command line-oriented editor and/or the GUI used for transforming the screenplay may be identical to the command line-oriented editor and/or the GUI used for directly creating the screenplay. In yet another embodiment, a converter is used which is adapted to automatically transform the conventional screenplay into the meta script language. For example, the conventional screenplay may be provided in a computer-readable form so that the converter is able to read the data from the conventional screenplay. Typically, the converter includes a parser which is able to analyze the language of the conventional screenplay. Furthermore, the converter typically includes a translator which is able to transform the analyzed language into the meta script language. Thus, the conventional screenplay may be automatically transformed into a meta script. In further embodiments, combinations of method steps 1010 and 1020 are employed. For example, a rough version of the screenplay is provided as a conventional screenplay and is transformed into a meta script (step 1020). The meta script of the transformed screenplay is then displayed on a GUI so that the author can edit it, e.g. by adding more details or additional scenes.

According to a further embodiment, predefined animation assets are arranged on a time line to define the sequence of views. In the context of this application, the term "time line" should be understood as defining the chronological order of actions and/or dialogues in a screenplay and/or motion picture. In other words, the time line defines the chronological order of the views within a sequence of views and/or the chronological order of sound accompanying the views. For example, when using a GUI the animation assets may be represented by icons which can be arranged on the time line by simple drag-and-drop action. In another example, the time line can be graphically represented by a line shown on the GUI. However, other representations of the time line may also be used especially for complex settings. Typically, the animation assets include at least one of the following: a ragdoll skeleton of a character, a 3D model of a character, a full body animation information for a character, a facial animation information for a character, a predefined motion sequence for a character, motion capturing information for a character, a surface texture information, a scenery information. Thus, predefined animations are provided to an author who may compose the screenplay from the predefined animations. Of course, the author will also have the option of creating new animation assets and/or to alter predefined animation assets.

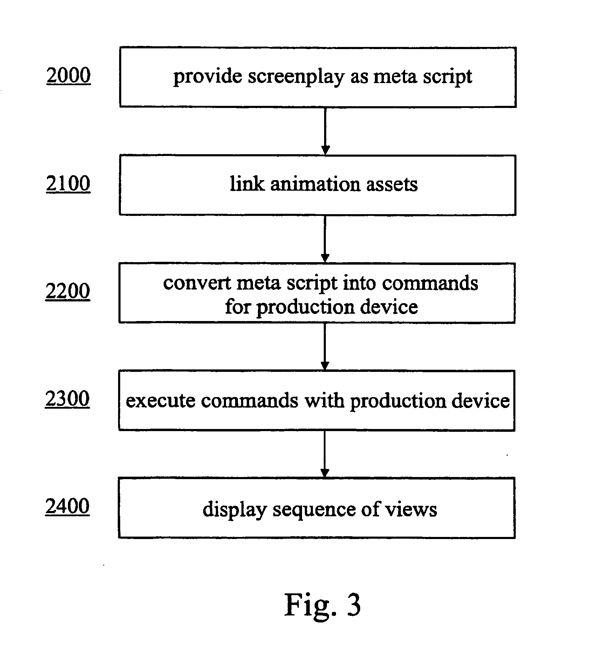

Fig. 3 shows a flow diagram of a method according to another embodiment. The method described in Fig. 3 is similar to the method shown in Fig. 1. Therefore, the above explanations with respect to Figs. 1 and 2 apply also to the method shown in Fig. 3. However, the method shown in Fig. 3 further includes the step 2100 of linking animation assets to the initial meta script. As has been described above, typical animation assets include at least one of the following: a ragdoll skeleton of a character, a 3D model of a character, a full body animation information for a character, a facial animation information for a character, a predefined motion sequence for a character, motion capturing information for a character, a surface texture information, a scenery information. It will be understood by those skilled in the art that the above list of animation assets is only exemplary and by no means exhaustive. By linking the animation assets to the meta script, the animation assets may be also converted into commands for the production device in subsequent step 2200. For example, a specific animation asset may require a camera zoom and/or a change of light which will be converted into respective control commands in step 2200. In embodiments using computer-generated imagery devices, for example 2D or 3D game engines, the animation assets may be directly provided in the language of the CGI devices or may be also provided in the meta script language and converted into the language of the CGI device.

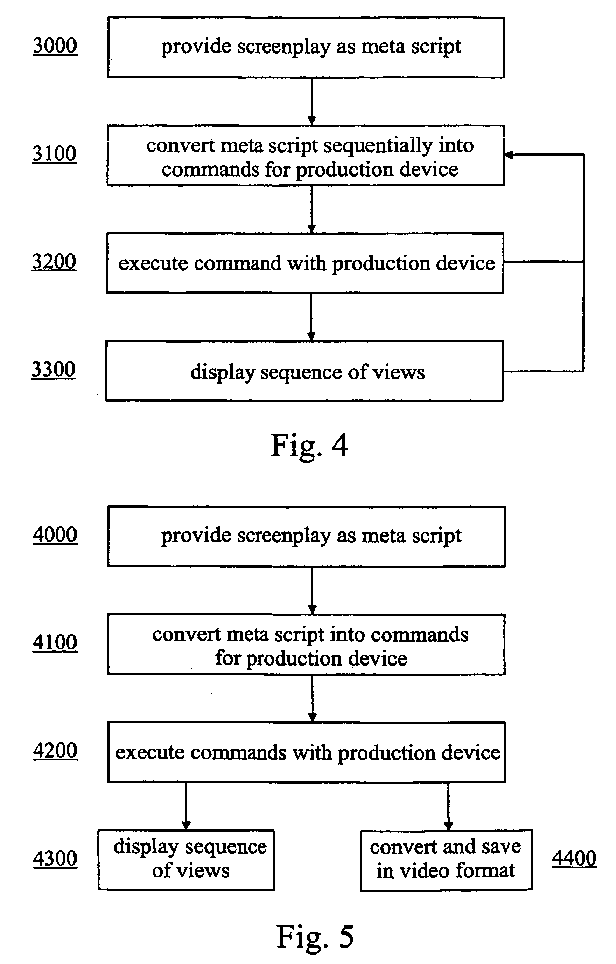

Fig. 4 shows a flow diagram of a method according to yet another embodiment. Therein, the initial meta script is converted sequentially into the control commands in step 3100. As has been described above, sequential conversion is typically done command-by-commands by means of an interpreter. The arrows on the right hand side of Fig. 4 indicate that, while the previously converted commands are executed with the motion picture production device in step 3200 and/or displayed on the display device in step 3300, the conversion of the meta script into commands goes on. In other words, method step 3100 and method steps 3200 and/or 3300 are executed in parallel. Thus, the commands are executed by the production device(s) and the resulting views are displayed while processing, i.e. converting, the meta script for later points on the time line. Accordingly, it is not necessary to wait until the whole meta script is fully converted and the full sequence of views is created which process may consume a considerable time based on the length of the screenplay. Rather, a director and/or other members of the production team can watch the produced views of a motion picture in real time while processing goes on in parallel. This allows for more efficient production of motion pictures. For example, in motion pictures combining animation and "real" images the conventional production method is to first shoot the "real" scenes and to add the animation later on. In contrast, the above described method allows watching the "real" scene together with the animation in real time. Thus, production time for a motion picture can be considerably reduced which also reduces the costs of such production.

Fig. 5 shows a flow diagram of a method according to still another embodiment. Therein, the method further includes the step 4400 of converting the sequence of views into a high definition SDI video format or a computer-based video file format. Thus, the produced sequence of views can be saved and/or stored on a digital medium. This allows a director and/or other member of the production team to rewatch a certain scene or view and to check whether the scene or view must be shot again. Typically, conversion into the video format and saving of the video data is carried out in parallel with displaying the produced views. However, it is also possible that the step 4400 of converting the views into a video format is carried out prior to the display step 4300. For example, the display device is able to display or even requires such video format. Then, the conversion into the video format may or even must be done prior to displaying the views on the display device. However, saving the video data may still be carried out in parallel with displaying the produced sequence of views.

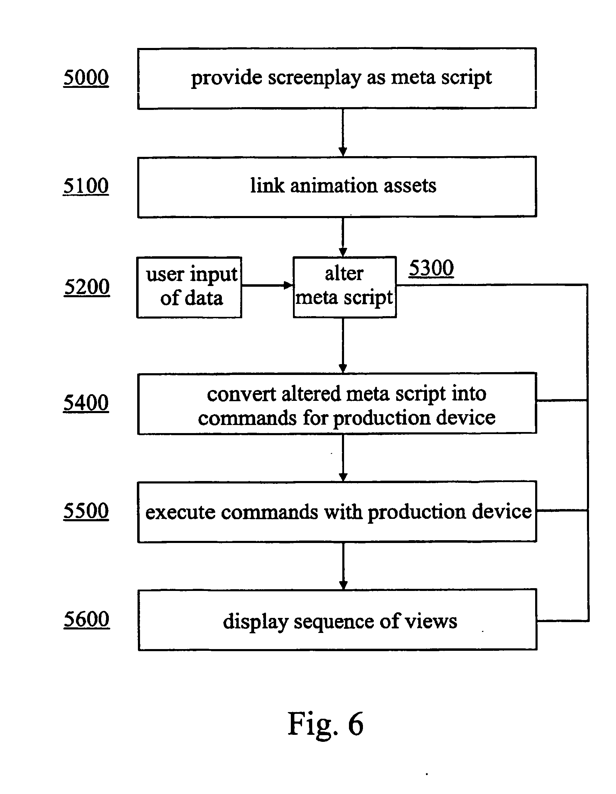

Fig. 6 shows a flow diagram of a method according to a further embodiment. Therein, the steps 5000 of providing a screenplay as a meta script and 5100 of linking animation assets thereto are similar to the respective method steps described above. Likewise, method steps 5500 of executing control commands with one or more production devices and 5600 of displaying a produced sequence of views are similar to the respective method steps described above. Therefore, the above explanations apply also to the method shown in Fig. 6.

However, the method according to the present embodiment allows altering the initial meta script or the content of the initial meta script. For this purpose, one or more users may input data in method step 5200. Typically, inputting the user input data is effected via at least one input device. In one example, the input device is a manual input device like a keyboard, joystick, a mouse, a scrollwheel, a trackball or similar devices. For example, a cameraman (user) may alter the position of a camera via a joystick while altering the zoom of the camera via a keyboard. According to another additional or optional embodiment, the input device is a motion capturing device. Motion capturing, sometimes also called motion tracking or mocap, is a technique of digitally recording movements. With a motion capturing device, the movement of one or more actors can be recorded and used for animating characters. For example, an actor may wear a special mocap suit having multiple active or passive optical markers which can be tracked by a camera system. The movement of the markers is then used to animate a 2D or 3D model of an animated character. With modem motion capturing devices and animation software, e.g. 2D or 3D game engines, the motion capturing data can be transformed into animated views of a character in real time.

In method step 5300, the user input data is used to alter the meta script, i.e. to provide an altered version of the meta script. In the present embodiment, altering of the initial meta script is allowed prior to conversion into the converted commands. Furthermore, the initial meta script can typically, be altered in real time, i.e. without any noticeable delay. When inputting data, a user may alter the meta script commands themselves or only the content thereof, e.g. parameter values of meta script commands. For example, a cameraman may decide to zoom on an object although this was not scheduled in the initial screenplay. Accordingly, a new "zoom" command has to be created and added to the meta script. Rather, a cameraman may control only the speed of a zoom or pan shot, thus altering only a parameter (speed) of the already scheduled "zoom" or "pan shot" command. It will be understood by those skilled in the art that this principle can be transferred also to other users like directors, actors, lighting technicians and/or any other member of the production staff.

Typically, a set of alterable variables is defined for each user, wherein a user's set of alterable variables contains the variables that can be altered by this user. For example, the set of alterable variables for a cameraman includes camera-related variables only whereas a set of alterable variables for an actor includes only variables related to the character played by this actor. Thus, users can influence the produced sequence of views only within their restricted range of alterable variables.

After altering the initial meta script, i.e. the screenplay, by the user input information, the altered meta script is converted into commands for the production device(s) in step 5400. This step 5400 is similar to steps 1100, 2200, 3100, and 4100 except for that it is executed on the altered meta script. Therefore, the above explanations also apply to step 5400. In particular, the altered meta script is converted sequentially into the control commands in step 5400. As has been described above, sequential conversion is typically done command-by-commands by means of an interpreter. The arrows on the right hand side of Fig. 6 indicate that, while the previously converted commands are executed with the motion picture production device(s) in step 5500 and/or displayed on the display device in step 5600, inputting user information and converting the meta script into control commands goes on. In other words, method steps 5200, 5300 and 5400 are executed in parallel with method steps 5500 and 5600. Thus, the commands are executed by the production device(s) and the resulting views are displayed while users can input further information as a response to the displayed views. Accordingly, a director, a cameraman, an actor and/or other members of the production team can watch the produced views of a motion picture in real time and control a camera, a character etc. in response to the displayed motion picture.

The above described option to alter the initial meta script, i.e. the screenplay or the way how the screenplay is realized, in real time by user input information approximates the production method shown in Fig. 6 to the conventional process of motion picture production. In particular, actors may control their characters, cameramen may control their cameras etc. However, the advantage of the present production method is still obtained since the whole information is transformed into a meta script language, i.e. into an altered meta script defining the sequence of views to be produced. Thus, the increased efficiency of computerizing motion picture production can be maintained while still allowing artistic expression and influence of the director, actors and/or other members of the production staff.

In the following, examples and embodiments of variables which may be altered and/or controlled via user input data are described. It will be understood by those skilled in the art that the following list of examples and/or embodiments is not intended to be limiting. In one example, the steps 5200 and 5300 of altering the initial meta script include at least one of the following: controlling, in real time, a camera view during display of the sequence of views, wherein a camera view information is recorded and used to modify the initial meta script to generate a modified meta script including the recorded camera view information. In another example, the steps 5200 and 5300 of altering the initial meta script include at least one of the following: controlling, in real time, a character during display of the sequence of views, wherein a character information is recorded and used to modify the initial meta script to generate a modified meta script including the recorded character information. In particular, said character information may include at least one of the following: a 3D model of a character, a surface texture information for a character, a full body animation information for a character, a facial animation information for a character, a motion sequence for a character, a motion capturing information for a character. In a further example, the steps 5200 and 5300 of altering the initial meta script include: including, in real time, a character speech during display of the sequence of views, wherein a character speech information is recorded and used to modify the initial meta script to generate a modified meta script including the recorded character speech information. Therein, a lip movement animation information for a character may be generated, in real-time, depending on the character speech information, wherein the lip movement animation information is included in the modified or altered meta script. In one example, the steps 5200 and 5300 of altering the initial meta script include controlling, in real time, a scenery during display of the sequence of views, wherein a scenery information is recorded and used to modify the initial meta script to generate a modified meta script including the recorded scenery information. Therein, the scenery information may include at least one of the following: a background information, an object information, a 3D model for an object, a surface texture information for an object, a sound information for an object, an animation information for an object, an effect information for an object.

In another embodiment, coherence control is carried out so that conflicting alterations are resolved. For example, if an actor navigates his character to a position occupied by a solid object, e.g. a table or a stone, a collision between the character and the solid object is detected. The same may happen if two characters are navigated on colliding paths. In such situations, different options for resolving the situation may be chosen, e.g. simply outputting a warning or not moving the character any further. In embodiments using a game engine as a production device, a collision detection of the game engine (or its physics engine) may be utilized within the coherence control.

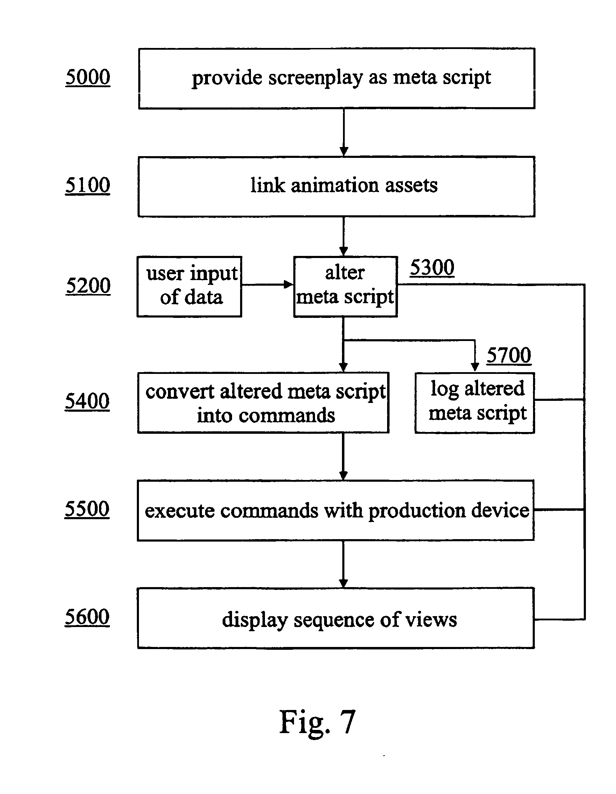

Fig. 7 shows a flow diagram of a method according to yet a further embodiment. The method shown in Fig. 7 is similar to the method shown in Fig. 6 but contains a further method step 5700. In this method step 5700, an altered version of the initial meta script, i.e. the screenplay, is generated by logging the alterations to the meta script due to user input information. The alterations are then included into the initial meta script to create an altered meta script. Typically, the altered version of the meta script is logged parallel to the execution of the meta script as shown in Fig. 7. Thus, the altered meta script is available immediately after finishing a run of the initial meta script.

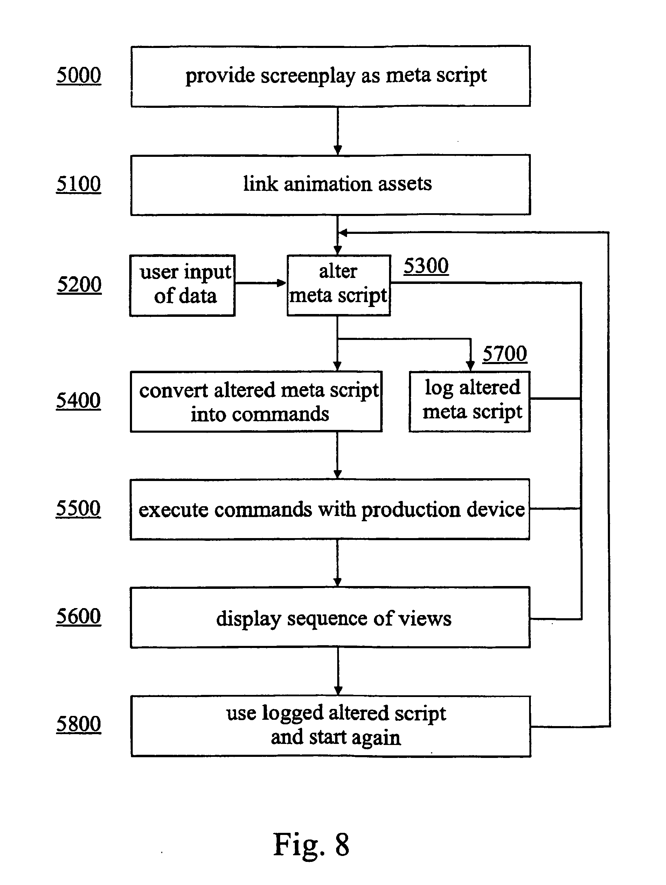

Fig. 8 shows a flow diagram of a method according to still a further embodiment. The embodiment shown in Fig. 8 is similar to the embodiment of Fig. 7 in that an altered version of the meta script is generated by logging the alterations and including the alterations into the initial meta script. However, according to the present embodiment, an altered version of the meta script is used again as the initial meta script. Thus, iterative alteration of the initial meta script, i.e. the original screenplay, is allowed to generate a iteratively modified sequence of views. Of course, the alterations included in this second cycle of production will also be logged to create a further altered version which may again serve as a starting point for a further cycle. Thus, the motion picture can be optimized cycle by cycle in an iterative manner. It is a specific advantage of the present production method that satisfying actions will be exactly reproduced in a subsequent cycle if the user does not input any data for altering the action. This is different from conventional motion picture production where each actor, the cameramen and/or other members of the production team have to repeat their respective action and/or dialogues if a scene has to be shot again. However, the acting will never be the same in two different shots and, therefore, the outcome of a certain scene may not represent the optimum result for each individual actor. In contrast, the present production method allows to repeat the scene but to alter only an unsatisfying portion of the action, e.g. only the action of a specific character, while the rest of the action remains unchanged with respect to the previous cycle. Thus, satisfying results can be achieved in reduced time.

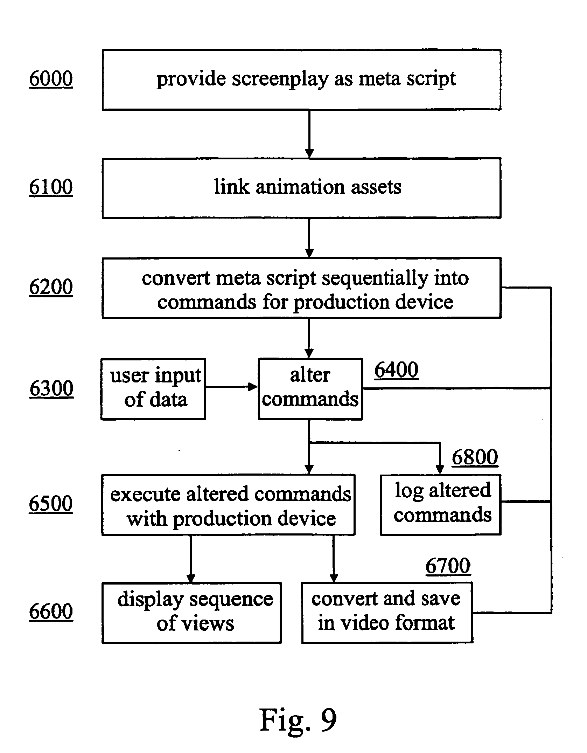

Fig. 9 shows a flow diagram of a method according to a different embodiment. The embodiment shown in Fig. 9 differs from the above described embodiments in that the altering of the initial meta script occurs after conversion of the meta script into control commands for the production device(s). This may be an option for at least some production devices which can be controlled more easily in this way. Similar as in the above described embodiments, the alteration of the commands is carried out in real time. Also, altering is effected by a user via at least one input device of the above described form. In particular, inputting the user input data may be effected via a keyboard, a joystick, a mouse, a scrollwheel, a trackball or similar devices, or even via a motion capturing device. Similarly, a set of alterable variables may also be defined for each user, wherein a user's set of alterable variables contains the variables that can be altered by this user. Thus, the influence of a specific user onto the produced motion picture can be restricted.

In the following, examples and embodiments of variables which may be altered and/or controlled via user input data are described. It will be understood by those skilled in the art that the following list of examples and/or embodiments is not intended to be limiting. In one example, the steps 6300 and 6400 of altering the initial meta script include at least one of the following: controlling, in real time, a camera view during display of the sequence of views, wherein a camera view information is recorded and used to modify the initial meta script to generate a modified meta script including the recorded camera view information. In another example, the steps 6300 and 6400 of altering the initial meta script include at least one of the following: controlling, in real time, a character during display of the sequence of views, wherein a character information is recorded and used to modify the initial meta script to generate a modified meta script including the recorded character information. In particular, said character information may include at least one of the following: a 3D model of a character, a surface texture information for a character, a full body animation information for a character, a facial animation information for a character, a motion sequence for a character, a motion capturing information for a character. In a further example, the steps 6300 and 6400 of altering the initial meta script include: including, in real time, a character speech during display of the sequence of views, wherein a character speech information is recorded and used to modify the initial meta script to generate a modified meta script including the recorded character speech information. Therein, a lip movement animation information for a character may be generated, in real-time, depending on the character speech information, wherein the lip movement animation information is included in the modified or altered meta script. In one example, the steps 6300 and 6400 of altering the initial meta script include controlling, in real time, a scenery during display of the sequence of views, wherein a scenery information is recorded and used to modify the initial meta script to generate a modified meta script including the recorded scenery information. Therein, the scenery information may include at least one of the following: a background information, an object information, a 3D model for an object, a surface texture information for an object, a sound information for an object, an animation information for an object, an effect information for an object.

In another embodiment, coherence control is carried out so that conflicting alterations are resolved. For example, if an actor navigates his character to a position occupied by a solid object, e.g. a table or a stone, a collision between the character and the solid object is detected. The same may happen if two characters are navigated on colliding paths. In such situations, different options for resolving the situation may be chosen, e.g. simply outputting a warning or not moving the character any farther. In embodiments using a game engine as a production device, a collision detection of the game engine (or its physics engine) may be utilized within the coherence control.

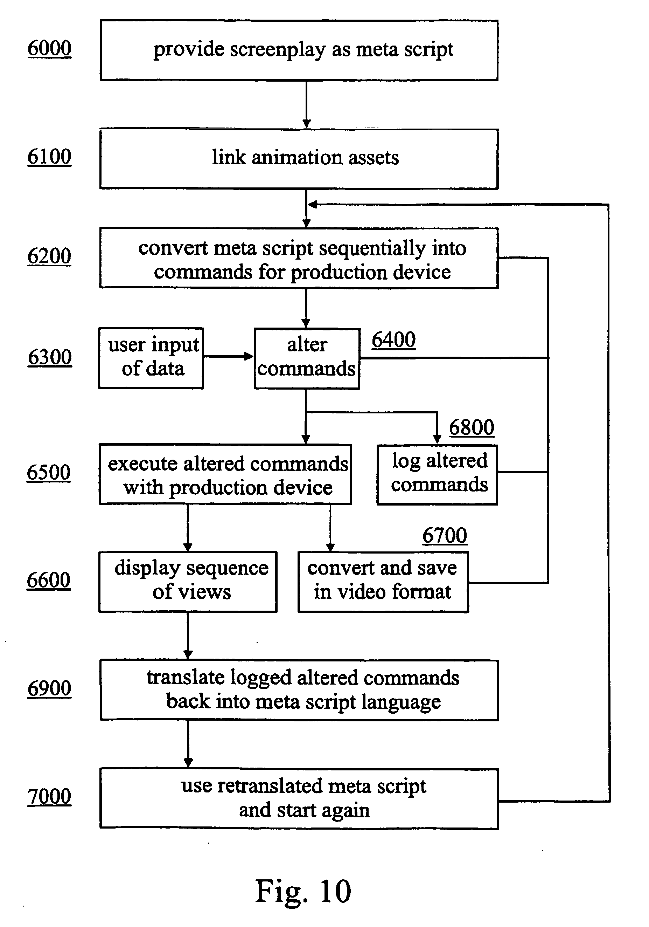

Fig. 10 shows a flow diagram of a method according to yet another embodiment. The embodiment shown in Fig. 10 is similar to the embodiment of Fig. 9 in that user input information is used to alter the control commands the meta script is converted into (steps 6300 and 6400). Furthermore, the alterations of the commands are logged in method step 6800 while the altered commands are executed with the production device(s) in method step 6500. Subsequently, the produced views are displayed on a display device in step 6600 and converted into a video format and saved in method step 6700. However, in the present embodiment the alterations are buffered during execution of the commands in step 6600 and an altered version of the meta script is generated only after the complete processing of the initial meta script. To obtain an altered meta script, the buffered altered control commands are translated back into the meta script language and are included into the initial meta script to form the altered meta script (step 6900). Subsequently, the retranslated altered meta script is used as an initial meta script for the next production cycle which is then started in method step 7000.

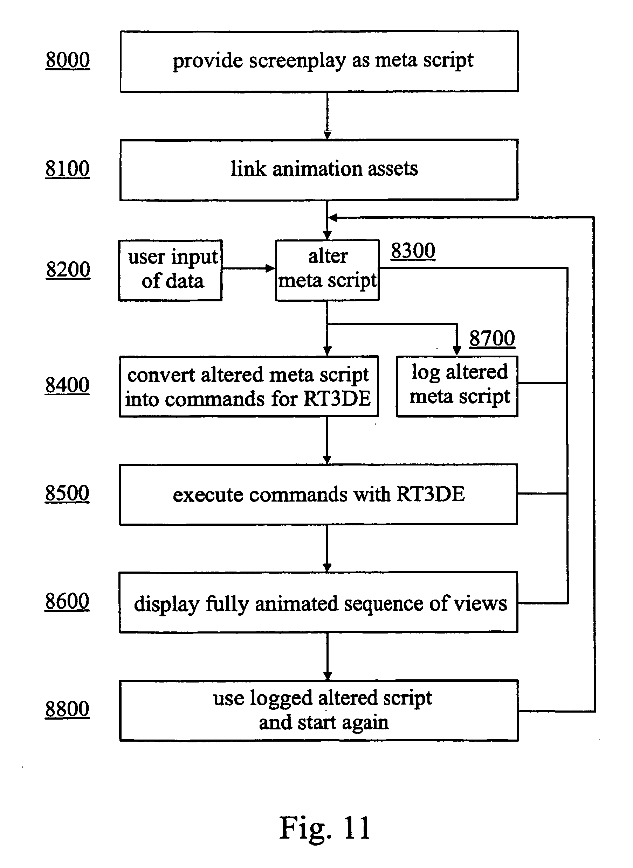

Fig. 11 shows a flow diagram of a method according to a further embodiment. Therein, a method of producing a fully-animated motion picture, a fully-animated movie, a fully-animated TV serial, a fully-animated internet serial, or a fully-animated mobile serial is shown. The method includes a first step 8000 of providing a meta script written in a meta script language for a computer. The meta script represents a screenplay for the motion picture, movie, TV serial, internet serial, or mobile serial to be produced. In a following method step 8100, animation assets are linked to the meta script. Typical animation assets include at least one of the following: a ragdoll skeleton of a character, a 3D model of a character, a full body animation information for a character, a facial animation information for a character, a predefined motion sequence for a character, motion capturing information for a character, a surface texture information, a scenery information. It will be understood by those skilled in the art that the above list of animation assets is only exemplary and by no means exhaustive. Next, one or more users can input data in step 8200 to alter the meta script in step 8300. In the present embodiment, altering of the initial meta script is allowed prior to conversion of the meta script into control commands in step 8400. In addition or alternatively, alteration may also be performed after conversion of the meta script as has been explained above. Typically, the initial meta script can be altered in real time, i.e. without any noticeable delay. When inputting data, a user may alter the meta script commands themselves or only the content thereof, e.g. parameter values of meta script commands. For example, a user controlling a virtual camera may decide to zoom on an animated object although this was not scheduled in the initial screenplay. Accordingly, a new "zoom" command has to be created and added to the meta script. Rather, the user may control only the speed of a zoom or pan shot, thus altering only a parameter (speed) of the already scheduled "zoom" or "pan shot" command. It will be understood by those skilled in the art that this principle can be transferred also to other users controlling other virtual objects like virtual light sources, animated characters and the like.

Typically, a set of alterable variables is defined for each user, wherein a user's set of alterable variables contains the variables that can be altered by this user. For example, the set of alterable variables for a camera-controlling user includes only camera-related variables whereas a set of alterable variables for a character animator includes only variables related to the character controller by this user. Thus, users can influence the produced sequence of views only within their restricted range of alterable variables.

After altering the initial meta script, i.e. the screenplay, by the user input information, the altered meta script is converted into commands for a real time 3D game engine (RT3DE) in step 8400. In particular, the altered meta script is converted sequentially into command of the RT3DE script language in step 8400. As has been described above, sequential conversion is typically done command-by-commands by means of an interpreter. The arrows on the right hand side of Fig. 11 indicate that, while the previously converted commands are executed with RT3DE in step 8500 and/or displayed on the display device(s) in step 8600, inputting user information and converting the meta script into control commands goes on. In other words, method steps 8200, 8300 and 8400 are executed in parallel with method steps 8500 and 8600. Thus, the commands are executed by the RT3DE and the resulting views are displayed while users can input further information as a response to the displayed views.

The above described option to alter the initial meta script in real time by user input information approximates the production method for a fully-animated motion picture to the conventional process of motion picture production. In particular, actors may control their characters, cameramen may control their cameras etc. However, the advantage of the present production method is still obtained since the whole information is transformed into a meta script language, i.e. into an altered meta script defining the sequence of views to be produced. Furthermore, a commercially available RT3DE is utilized for rendering the sequence of views in real time. Thus, the increased efficiency of computerized and fully-animated motion picture production can be maintained while still allowing artistic expression and influence of the director, actors and/or other members of the production staff. In particular, the above described motion picture production method is more time-efficient than conventional production methods for animated motion pictures. Furthermore, RT3DE can be implemented on relatively cheap computers compared with the large specialized rendering farms provided by animation studios like Pixar or others. Due to the faster production time and the reduced hardware costs, the present production method promotes development of fully-animated motion pictures.

In the following, examples and embodiments of variables which may be altered and/or controlled via user input data are described. It will be understood by those skilled in the art that the following list of examples and/or embodiments is not intended to be limiting. In one example, the steps 8200 and 8300 of altering the initial meta script include at least one of the following: controlling, in real time, a camera view during display of the sequence of views, wherein a camera view information is recorded and used to modify the initial meta script to generate a modified meta script including the recorded camera view information. In another example, the steps 8200 and 8300 of altering the initial meta script include at least one of the following: controlling, in real time, a character during display of the sequence of views, wherein a character information is recorded and used to modify the initial meta script to generate a modified meta script including the recorded character information. In particular, said character information may include at least one of the following: a 3D model of a character, a surface texture information for a character, a full body animation information for a character, a facial animation information for a character, a motion sequence for a character, a motion capturing information for a character. In a further example, the steps 8200 and 8300 of altering the initial meta script include: including, in real time, a character speech during display of the sequence of views, wherein a character speech information is recorded and used to modify the initial meta script to generate a modified meta script including the recorded character speech information. Therein, a lip movement animation information for a character may be generated, in real-time, depending on the character speech information, wherein the lip movement animation information is included in the modified or altered meta script. In one example, the steps 8200 and 8300 of altering the initial meta script include controlling, in real time, a scenery during display of the sequence of views, wherein a scenery information is recorded and used to modify the initial meta script to generate a modified meta script including the recorded scenery information. Therein, the scenery information may include at least one of the following: a background information, an object information, a 3D model for an object, a surface texture information for an object, a sound information for an object, an animation information for an object, an effect information for an object.

In another embodiment, coherence control is carried out so that conflicting alterations are resolved. For example, if an actor navigates his character to a position occupied by a solid object, e.g. a table or a stone, a collision between the character and the solid object is detected. The same may happen if two characters are navigated on colliding paths. In such situations, different options for resolving the situation may be chosen, e.g. simply outputting a warning or not moving the character any farther. In embodiments using a game engine as a production device, a collision detection of the game engine (or its physics engine) may be utilized within the coherence control.

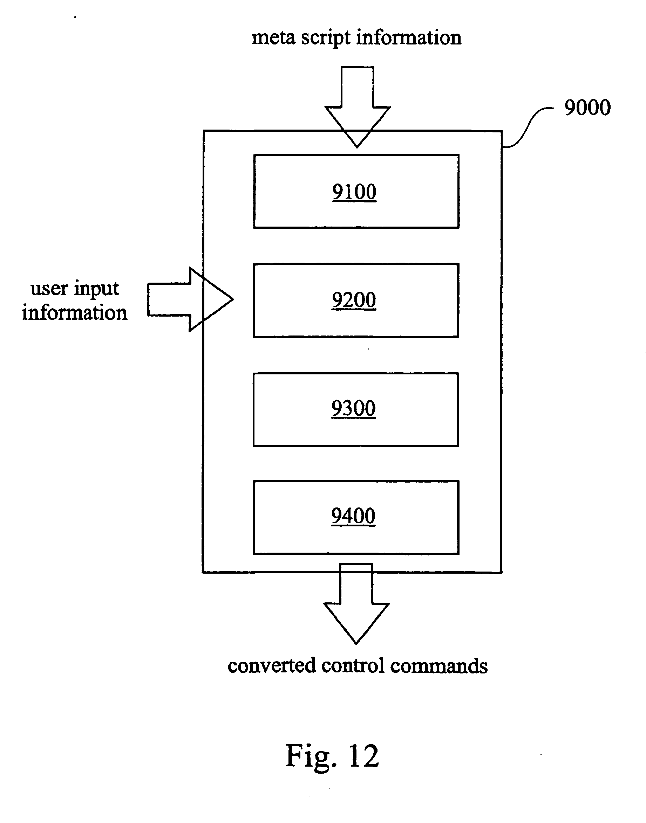

Fig. 12 is a diagram of a computer program 9000 according to an embodiment. The computer program 9000 is adapted for converting a screenplay written in a meta script language into a sequence of commands of a motion picture production device. In one embodiment, computer program 9000 includes a first interface 9100 which is adapted to receive screenplay information provided in a meta script language for a computer. Furthermore, computer program 9000 includes at least one second interface which is adapted to receive user input information for altering the screenplay information received via the first interface. If more than one user should be enabled to alter the screenplay information, more than one second interfaces 9200 will be provided by computer program 9000. Further to the above, computer program 9000 includes an interpreter 9300 which is adapted to convert the screenplay information provided in the meta script language into control commands for the motion picture production device. Typically, interpreter 9300 is able to convert the meta script into several languages. In particular, in embodiments employing more than one motion picture production device, interpreter 9300 is capable of converting the meta script into respective command sets for each of the production devices to be controlled. Further to the above, computer program 9000 includes at least one third interface 9400 which is adapted to transmit the converted control commands to at least one motion picture production device. In embodiments employing more than one motion picture production device, there may be provided a third interface 9400 for each of the production devices. In particular, the third interfaces 9400 may be individually adapted to different production devices, e.g. cameras, lighting consoles, real time 3D engines and the like. For example, the motion picture production device may be at least one of a camera, a robot arm, a lighting console, a spotlight, a sound mixer, a video server, a video hard disc system, and the third interface 9400 will be adapted accordingly. In another embodiment, the motion picture production device is a computer-generated imagery (CGI) device, for example a real time 3D engine (RT3DE). In this embodiment, the screenplay information is converted into commands of a RT3DE script language by interpreter 9300 and the third interface 9400 is adapted accordingly.

In one embodiment, the computer program 9000 provides a set of alterable user input information for each user. A user's set of alterable input information contains the information that can be altered by this user.

In another embodiment, the computer program 9000 is adapted to create an altered version of the initial screenplay information by logging the alterations caused by the user input information and including said alterations into the initial screenplay information. In one example, computer program 9000 is adapted to create the altered version of the screenplay information parallel to converting the initial screenplay information into the control commands by interpreter 9300. In another example, computer program 9000 is adapted to buffer the alterations during conversion of the initial screenplay information into the control commands. The altered version of the screenplay information is then created after conversion of the screenplay information. In this embodiment, computer program 9000 may include a re-translator (not shown) which is adapted to retranslate control commands into the meta script language in which the screenplay information is provided.

Typically, computer program 9000 is adapted to be executed on a server of a computer system having a client-server architecture. In such an embodiment, the first to third interfaces are interfaces to clients of the client-server architecture. In other embodiments, computer program 9000 may further be adapted to be executed on a client in a client-server architecture. In this embodiment, computer program 9000 may further include a fourth interface adapted to transmit user input information to a server.

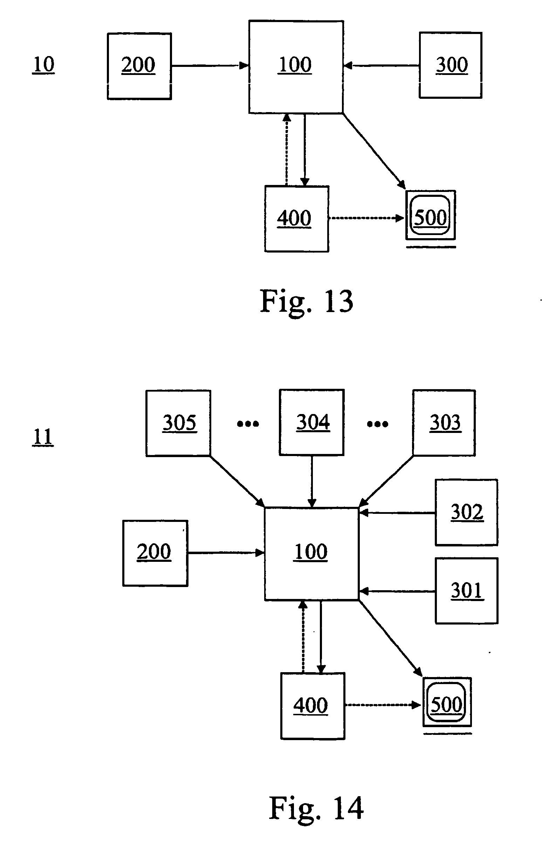

Fig. 13 is a schematic view of a system 10 according to an embodiment. The system 10 is adapted for executing a motion picture production method according to an embodiment described herein or derivable from one of the embodiments described herein. In one embodiment, the system 10 includes a computer system having a client-server architecture. The computer system includes at least one server 100 which is adapted to receive screenplay information provided in a meta script language. Furthermore, server 100 is adapted to receive user input information for altering the screenplay information and to convert the screenplay information provided in the meta script language into control commands for a motion picture production device 400. Moreover, server 100 is adapted to transmit the converted control commands to the at least one motion picture production device 400. For example, server 100 may be adapted in the above described manner by running a computer program according to one of the above described embodiments on server 100.

The system 10 further includes at least one first client 200 which is adapted to provide screenplay information in a meta script language to the server 100. For example, first client 200 may include a file server on which the screenplay information is saved. Furthermore, a graphical user interface (GUI) may be implemented on first client 200, thus allowing an author to create or convert a screenplay in the meta script language.

The system 10 further includes at least one second client 300 which is adapted to provide user input information for altering the screenplay information provided by first client 200. For example, the at least one second client is connected to at least one input device for inputting user input information for altering the screenplay information. In one example, the input device is a manual input device like a keyboard, joystick, a mouse, a scrollwheel, a trackball or a similar device. For example, a cameraman (user) may alter the position of a camera via a joystick while altering the zoom of the camera via a keyboard or scrollwheel. According to another additional or optional embodiment, the input device is a motion capturing device. Motion capturing, sometimes also called motion tracking or mocap, is a technique of digitally recording movements. With a motion capturing device, the movement of one or more actors can be recorded and used for animating characters. For example, an actor may wear a special mocap suit having multiple active or passive optical markers which can be tracked by a camera system. The movement of the markers is then used to animate a 2D or 3D model of an animated character. Thus, the user input device connected to second client 300 may be a complex system in itself. For example, the input device may include virtual reality (VR) devices, e.g. a VR glove, a VR suit or the like.

Furthermore, system 10 typically includes at least one motion picture production device 400 which is connected to server 100 and adapted to be controlled by control commands transmitted from server 100. For example, the motion picture production device may be at least one of a camera, a robot arm, a lighting console, a spotlight, a sound mixer, a video server, a video hard disc system. In other embodiments, the motion picture production device is computer-generated imagery (CGI) device, e.g. a real time 3D engine (RT3DE).

Finally, system 10 includes at least one display device 500 which connected to the computer system and is adapted to display a sequence of views, i.e. a motion picture produced with system 10. For example, display device 500 is a monitor or other device for visualizing video and audio data and/or computer-generated graphics and/or sound. As shown in Fig. 13, display device 500 may be either directly connected to production device 400 or may be connected to server 100. In the latter case, production device 400 must transmit the visual and/or acoustical data back to server 100 so that it can be displayed on display device 500. This may be useful in cases where more than one production devices 400 are provided. For example, pictures shot by a camera and sound recorded by microphones can be transmitted to server 100, mixed together in server 100, and supplied to display device 500 to be displayed. In particular, if "real" images should be mixed with animated objects, i.e. one of the production devices is a "real" camera and another production device is a CGI device for creating the animation, it is advantageous when the camera information and the computer-generated animation are both provided to server 100 to be combined. The combined visual or audio-visual information will then be supplied to display device 500 by server 100.

From the above description, it will be understood by those skilled in the art that system 10 is specifically adapted for executing a production method according to embodiments described or indicated herein. Furthermore, it will be understood by those skilled in the art that at least a part of the computer system may be realized as a workstation or PC cluster.

Fig. 14 is a schematic view of a system 11 according to another embodiment. The basic configuration of system 11 is similar to system 10 shown in Fig. 13. However, system 11 includes several second clients 301, 302, 303, 304, 305 which allow simultaneous altering of screenplay information by several users. For example, client 301 may be a director's client, client 302 may be a cameraman's client, client 303 may be a lighting technician's client, client 304 may be an actor's client, and client 305 may be a the client of a further actor. Thus, system 11 allows each of the users to alter the screenplay information in real time. However, the set of information which may be altered by a specific user may be restricted as has been described above.

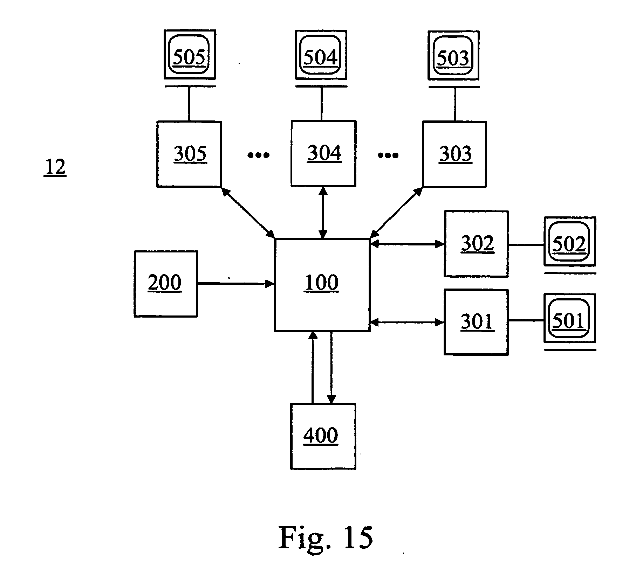

Fig. 15 is a schematic view of a system 12 according to a further embodiment. The configuration of system 12 is similar to the configuration of system 11 shown in Fig. 14. However, system 12 includes several display devices 501, 502, 503, 504, 505, each being connected to a corresponding second client 301, 302, 303, 304, 305. Thus, each user of one of second clients 301, 302, 303, 304, 305 may watch the produced sequence of views on his own display device. Accordingly, server 100 must provide the relevant visual or audio-visual information to each of second clients 301, 302, 303, 304, 305 which will then supply the visual or audio-visual information to their corresponding display devices 501, 502, 503, 504, 505. Such a local network structure of system 12 allows second clients 301, 302, 303, 304, 305 to be remote from each other and only connected by a suitable network. If a fast broadband access is provided at each of second clients 301, 302, 303, 304, 305, the network structure may even be established via the internet. Thus, a director, a cameraman, one or more actors and/or other members of the production staff may be located at different places, e.g. different cities, countries or even continents, and still may collectively produce a motion picture.

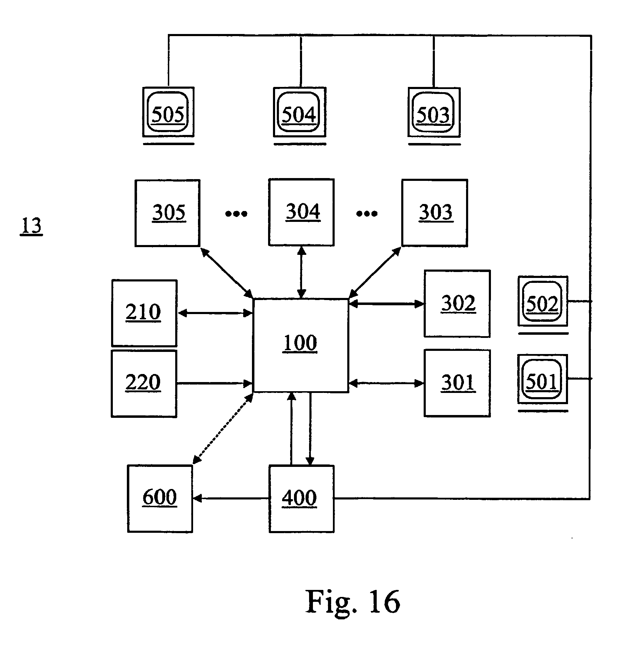

Fig. 16 is a schematic view of a system 13 according to yet another embodiment. Therein, the first client 200 includes a client 210 for storing and/or creating screenplay information. Also, altered screenplay information, e.g. iteratively altered versions of the initial meta script. First client 200 further includes a file server 220 for storing animation assets in a database. Furthermore, system 13 includes, a multi-channel HD video server 600 for storing the sequence of views produced with system 13. Video server 600 may be directly connected to the production devices, especially in systems for producing fully-animated motion pictures, but may alternatively or additionally also be connected to server 100. Especially in systems for producing fully-animated motion pictures, production device 400 is a CGI device, e.g. a RT3DE. Therefore, the complete visual information is generated by RT3DE 400. Therefore, display devices 501, 502, 503, 504, 505 may be directly connected to RT3DE 400.

This written description uses examples to enable any person skilled in the art to make and use the described technical teaching. While various specific embodiments have been described herein, those skilled in the art will recognize that the technical teaching can be practiced also with modification within the scope of the claims. Especially, mutually non-exclusive features of the embodiments described above may be combined with each other. The patentable scope is defined by the claims.

## Claims

1. A method for producing a sequence of views, comprising the steps of:
(a) providing a screenplay as an initial meta script in a meta script language for a computer;
(b) converting the initial meta script into commands for controlling at least one motion picture production device;
(c) executing the converted commands with said at least one motion picture production device in order to create a sequence of views; and
(d) displaying, in real time, the sequence of views on a display device, wherein altering the initial meta script or the content of the initial meta script is allowed for one or more users during executing the converted commands with the motion picture production device, and
wherein an altered version of the initial meta script is generated by logging the alterations and including the alterations into the initial meta script, and
wherein, if an alteration is executed on one or more converted commands, the one or more altered commands are translated back into the meta script language to be included into the altered meta script.

2. The method according to claim 1, wherein the motion picture production device is at least one of a camera, a robot arm, a lighting console, a spotlight, a sound mixer, a video server, a video hard disc system or
a computer-generated imagery (CGI) device.

3. The method according to claim 2, wherein the motion picture production device is a CGI device, and the CGI device is a real time 3D engine (RT3DE) and wherein the initial meta script is converted into commands of a RT3DE script language.

4. The method according to claim 3, further including the step of linking animation assets to the initial meta script.

5. The method according to claim 1, wherein, in step (a), the screenplay is created as an initial meta script or
wherein, in step (a), the screenplay is transformed into an initial meta script.

6. The method according to claim 5, wherein, in step (a), predefined animation assets are arranged on a time line to define the sequence of views.

7. The method according to claim 1, wherein the altering of the initial meta script is allowed prior to conversion into the converted commands or
wherein the altering of the initial meta script is allowed after to conversion into the converted commands.

8. The method according to claim 1, wherein a set of alterable variables is defined for each user, wherein a user's set of alterable variables contains the variables that can be altered by this user.

9. The method according to claim 1, wherein the step of altering the initial meta script includes
controlling, in real time, a camera view during display of the sequence of views, wherein a camera view information is recorded and used to modify the initial meta script to generate a modified meta script including the recorded camera view information,
controlling, in real time, a character during display of the sequence of views, wherein a character information is recorded and used to modify the initial meta script to generate a modified meta script including the recorded character information,
including, in real time, a character speech during display of the sequence of views, wherein a character speech information is recorded and used to modify the initial meta script to generate a modified meta script including the recorded character speech information,
controlling, in real time, a scenery during display of the sequence of views, wherein a scenery information is recorded and used to modify the initial meta script to generate a modified meta script including the recorded scenery information.

10. The method according to claim 1, further including coherence control so that conflicting alterations are resolved.

11. The method according to claim 1, wherein the altered version of the meta script is generated parallel to the execution of the initial meta script or
wherein the alterations are buffered during execution of the initial meta script and the altered version of the meta script is generated after the execution of the initial meta script.

12. The method according to claim 1, wherein an altered version of the meta script is used as the initial meta script to allow iterative alteration of the meta script to generate a iteratively modified sequence of views.

13. A method of producing a fully-animated motion picture, a fully-animated movie, a fully-animated TV serial, a fully-animated internet serial, or a fully-animated mobile serial, including the steps of a method according to any of the preceding claims, wherein the
the meta script represents a screenplay for the motion picture, movie, TV serial, internet serial, or mobile serial;
the meta script is converted into commands for controlling a real time 3D game engine;
the converted commands are executed with said real time 3D game engine in order to create a fully-animated sequence of views; and
the fully-animated sequence of views is displayed, in real time, on a display device.

14. A computer program comprising code means adapted to perform all the steps of the method of claim 1 when said program is run on a computer.

15. A system for producing a sequence of views, comprising:
a computer system having a client-server architecture and comprising:
at least one server adapted to receive screenplay information provided in a meta script language, to receive user input information for altering said screenplay information, to convert the screenplay information provided in a meta script language into control commands for a motion picture production device, and to transmit the converted control commands to the at least one motion picture production device,
at least one first client adapted to provide screenplay information in a meta script language to said server, and
at least one second client adapted to provide user input information for altering said screenplay information,
at least one motion picture production device connected to said server and being adapted to be controlled by said converted control commands, and
at least one display device connected to said computer system and being adapted to display a sequence of views,
wherein the system is adapted to perform the method according to any of claims 1 to 12.

## Patentansprüche

1. Verfahren zur Herstellung einer Abfolge von Ansichten umfassend die Schritte:
(a) Bereitstellung eines Drehbuchs als ein erstes Metaskript in einer Metasprache für einen Computer;
(b) Umwandlung des ersten Metaskriptes in Befehle zur Steuerung zumindest einer Filmherstellungsvorrichtung;
(c) Durchführung der umgewandelten Befehle mit Hilfe der zumindest einen Filmherstellungs-vorrichtung, um eine Abfolge von Ansichten zu erzeugen; und
(d) Anzeige, in Echtzeit, der Ansichtenabfolge auf einem Anzeigegerät,
wobei das erste Metaskript verändert wird oder der Inhalt des ersten Metaskripts, für einen oder mehrere Benutzer während der Ausführung der umgewandelten Befehle mit der Filmherstellungsvorrichtung zugelassen ist, und
wobei eine veränderte Version des ersten Metaskripts erzeugt wird, durch Erfassung der Veränderungen und Einfügen der Veränderungen in den ersten Metaskript, und
wobei, wenn eine Veränderung an einem oder an mehreren Befehlen vorgenommen wird, der eine oder die mehreren Befehle in die Metaskriptsprache zurückübersetzt werden, um sie in den veränderten Metaskript einzufügen.

2. Das Verfahren nach Anspruch 1, wobei die Filmherstellungsvorrichtung zumindest eine Kamera, ein Roboterarm, eine Belichtungskonsole, ein Scheinwerfer, ein Tonmischgerät, eine Videoserver, ein Videofestplattensystem oder eine computergenerierte Bildervorrichtung. (CGI) ist.

3. Das Verfahren nach Anspruch 2, wobei die Filmherstellungsvorrichtung eine CGI-Vorrichtung ist, und die CGI-Vorrichtung eine Echtzeit 3D-Maschine (RT3DE) und wobei das erste Mertaskript in Befehle einer RT3DE Skriptsprache umgewandelt wird.

4. Das Verfahren nach Anspruch 3, des Weiteren umfassend den Schritt der Verknüpfung von Animationselementen mit dem ersten Metaskript.

5. Das Verfahren nach Anspruch 1, wobei in Schritt (a), das Drehbuch als ein erstes Metaskript erzeugt wird, oder wobei in Schritt (a) das Drehbuch in ein erstes Metaskript umgewandelt wird.

6. Das Verfahren nach Anspruch 5, wobei in Schritt (a) vordefinierte Animationselemente auf einer Zeitachse angeordnet werden, um die Ansichtenabfolge zu definieren.

7. Das Verfahren nach Anspruch 1, wobei die Veränderung des ersten Metaskripts vor der Umwandlung in die umgewandelten Befehle erlaubt ist, oder wobei die Veränderung des ersten Metaskripts nach der Umwandlung in die umgewandelten Befehle erlaubt ist.

8. Das Verfahren nach Anspruch 1, wobei ein Satz veränderbarer Variablen für jeden Benutzer definiert wird, wobei der Satz veränderbarer Variablen des Benutzers die Variablen enthält, die von diesem Benutzer verändert werden können.

9. Das Verfahren nach Anspruch 1, wobei der Schritt des Veränderns des ersten Metaskripts folgendes einschließt:
die Kontrolle in Echtzeit, einer Kameraansicht während einer Anzeige der Ansichtenabfolge,
wobei eine Kameraansichtsinformation aufgezeichnet und benutzt wird, um das erste Metaskript zu verändern, um ein verändertes Metaskript zu erzeugen, das die aufgezeichnete Kameraansichtsinformation einschließt,
die Kontrolle in Echtzeit, einer Figur während einer Anzeige der Ansichtenabfolge, wobei eine Figureninformation aufgezeichnet und benutzt wird, um das erste Metaskript zu verändern, um ein verändertes Metaskript zu erzeugen, das die aufgezeichnete Figureninformation einschließt,
das Einfügen, in Echtzeit, einer Figurenrede während einer Anzeige der Ansichtenabfolge,
wobei eine Figurenredeinformation aufgezeichnet und benutzt wird, um das erste Metaskript zu verändern, um ein verändertes Metaskript zu erzeugen, das die aufgezeichnete Figurenredeinformation einschließt,
die Kontrolle in Echtzeit, einer Landschaft während einer Anzeige der Ansichtenabfolge,
wobei eine Landschftsinformation aufgezeichnet und benutzt wird, um das erste Metaskript zu verändern, um ein verändertes Metaskript zu erzeugen, das die aufgezeichnete Landschaftsinformation einschließt.

10. Das Verfahren nach Anspruch 1, des Weiteren umfassend Kohärenzkontrolle, so dass sich widersprechende Veränderungen gelöst werden.

11. Das Verfahren nach Anspruch 1, wobei die veränderte Version des Metaskripts parallel zur Ausführung des ersten Metaskripts erzeugt wird oder wobei die Veränderungen während der Ausführung des ersten Metaskripts zwischengespeichert werden und die veränderte Version des Metaskripts nach der Ausführung des ersten Metaskripts erzeugt wird.

12. Das Verfahren nach Anspruch 1, wobei eine veränderte Version des Metaskripts als das erste Metaskript verwendet wird, um eine iterative Veränderung des Metaskripts zu erlauben, um eine iterativ veränderte Ansichtenabfolge zu erzeugen.

13. Ein Verfahren zur Herstellung eines voll animierten Films, voll animierten Spielfilms, einer voll animierten TV-Serie, voll animierten Internet-Serie oder einer voll animierten Mobiltelefon-Serie, umfassend die Verfahrensschritte einer der vorstehenden Ansprüche, wobei das Metaskript ein Drehbuch für ein Film, ein Spielfilm, eine TV-Serie, eine Internet-Serie oder eine Mobiltelefon-Serie darstellt;
das Metaskript in Befehle zur Steuerung eine Echtzeit-3D-Spielekonsole umgewandelt wird; die umgewandelten Befehle mit der genannten Echtzeit-3D-Spielekonsole ausgeführt werden, um eine voll animierte Ansichtenabfolge zu erzeugen; und
die voll animierte Ansichtenabfolgein in Echtzeit auf einem Anzeigegerät abgespielt wird.

14. Ein Computerprogramm umfassend Codemittel, das dazu geeignet ist, all die Schritte des Verfahrens aus Anspruch 1 auszuführen, wenn man das Programm auf einem Computer laufen lässt.

15. Ein Systems zur Erzeugung einer Ansichtenabfolge, umfassend:
Ein Computersystem, das eine Klient-Server-Architektur aufweist, umfassend:
Zumindest einen Server der dazu geeignet ist Drehbuchanweisungen zu empfangen, die in einer Metaskriptsprache geliefert werden, Empfängerinput zu empfangen zur Veränderung der Drehbuchinformation, die Drehbuchinformation, die in einer Metaskriptsprache geliefert wird, in Steuerungsbefehle für eine Filmproduktionseinheit umzuwandeln und, die umgewandelten Steuerungsbefehle zu der zumindest einen Filmherstellungsvorrichtung zu übertragen,
zumindest einen ersten Klienten der dazu geeignet ist Drehbuchinformationen in einer Metaskriptsprache zu dem Server zu liefern,
zumindest einen zweiten Klient der dazu geeignet ist Benutzerinputinformation zur Veränderung der Drehbuchinformationen zu liefern,
zumindest eine mit dem Server verbundene Filmherstellungsvorrichtung, und die dazu geeignet ist eine Ansichtenabfolge abzuspielen,
zumindest eine mit dem Computersystem verbunden Abspielvorrichtung, und die dazu geeignet ist eine Ansichtenabfolge abzuspielen,
wobei das System geeignet ist das Verfahren gemäß einem der Ansprüche 1 bis 12 durchzuführen.

## Revendications

1. Procédé pour produire une séquence de vues, comprenant les étapes de :
(a) fourniture d'un scénario comme un script méta initial dans un langage script méta pour un ordinateur ;
(b) conversion du script méta initial en commandes pour commander au moins un dispositif de production d'animation ;
(c) exécution des commandes converties avec ledit au moins un dispositif de production d'animation afin de créer une séquence de vues ; et
(d) affichage, en temps réel, de la séquence de vues sur un dispositif d'affichage,
dans lequel la modification du script méta initial ou du contenu du script méta initial est autorisée pour un ou plusieurs utilisateurs pendant l'exécution des commandes converties avec le dispositif de production d'animation, et
dans lequel une version modifiée du script méta initial est générée en enregistrant dans un journal les modifications et comprenant les modifications dans le script méta initial, et
dans lequel, si une modification est exécutée sur une ou plusieurs commandes converties, les une ou plusieurs commandes modifiées sont retraduites dans le langage script méta à inclure dans le script méta modifié.

2. Procédé selon la revendication 1, dans lequel le dispositif de production d'animation est au moins un d'une caméra, d'un bras de robot, d'une console d'éclairage, d'un spot de lumière, d'un mélangeur de son, d'un serveur vidéo d'un système de disque dur vidéo ou un dispositif d'imagerie généré par un ordinateur (CGI).

3. Procédé selon la revendication 2, dans lequel le dispositif de production d'animation est un dispositif CGI, et le dispositif CGI est un moteur 3D en temps réel (RT3DE) et dans lequel le script méta initial est converti en commandes d'un langage de script RT3DE.

4. Procédé selon la revendication 3, comprenant en outre l'étape de liaison de scènes d'animation au script méta initial.

5. Procédé selon la revendication 1, dans lequel, dans l'étape (a), le scénario est créé comme un script méta initial ou
dans lequel, dans l'étape (a), le scénario est transformé en un script méta initial.

6. Procédé selon la revendication 5, dans lequel, dans l'étape (a), des scènes d'animation prédéfinies sont disposées sur une ligne de temps pour définir la séquence de vues.

7. Procédé selon la revendication 1, dans lequel la modification du script méta initial est autorisée avant la conversion en commandes converties ou
dans lequel la modification du script méta initial est autorisée après conversion en commandes converties.

8. Procédé selon la revendication 1, dans lequel un ensemble de variables modifiables est défini pour chaque utilisateur, dans lequel un ensemble d'utilisateurs de variables modifiables contient les variables qui peuvent être modifiées par cet utilisateur.

9. Procédé selon la revendication 1, dans lequel l'étape de modification du script méta initial comprend
la commande, en temps réel, d'une vue de caméra pendant l'affichage de la séquence de vues, dans lequel des informations de vue de caméra sont enregistrées et utilisées pour modifier le script méta initial pour générer un script méta modifié comprenant les informations de vue de caméra enregistrées,
la commande, en temps réel, d'un caractère pendant l'affichage de la séquence de vues, dans lequel des informations de caractère sont enregistrées et utilisées pour modifier le script méta initial pour générer un script méta modifié comprenant les informations de caractère enregistrées,
comprenant, en temps réel, une voix de caractère pendant l'affichage de la séquence de vues, dans lequel des informations de voix de caractère sont enregistrées et utilisées pour modifier le script méta initial pour générer un script méta modifié comprenant les informations de voix de caractère enregistrées,
la commande, en temps réel, d'un décor pendant l'affichage de la séquence de vues, dans lequel des informations de décor sont enregistrées et utilisées pour modifier le script méta initial pour générer un script méta modifié comprenant les informations de décor enregistrées.

10. Procédé selon la revendication 1, comprenant en outre une commande de cohérence pour que des modifications conflictuelles soient résolues.

11. Procédé selon la revendication 1, dans lequel la version modifiée du script méta est générée parallèlement à l'exécution du script méta initial ou
dans lequel les modifications sont mises en tampon pendant l'exécution du script méta initial et la version modifiée du script méta est générée après l'exécution du script méta initial.

12. Procédé selon la revendication 1, dans lequel une version modifiée du script méta est utilisée comme un script méta initial pour autoriser une modification itérative du script méta pour générer une séquence de vues modifiée de façon itérative.

13. Procédé de production d'une animation entièrement animée, d'un film entièrement animé, d'une série TV entièrement animée, d'une série Internet entièrement animée, ou d'une série pour mobile entièrement animée, comprenant les étapes d'un procédé selon l'une quelconque des revendications précédentes, dans lequel
le script méta représente un scénario pour l'animation, le film, la série TV, la série Internet, ou la série pour mobile ;
le script méta est converti en commandes pour commander un moteur de jeu 3D en temps réel ;
les commandes converties sont exécutées avec ladite machine de jeu 3D en temps réel afin de créer une séquence de vues entièrement animée ; et
la séquence de vues entièrement animée est affichée, en temps réel, sur un dispositif d'affichage.

14. Programme informatique comprenant un moyen de code adapté pour réaliser toutes les étapes du procédé de la revendication 1 lorsque ledit programme est exécuté sur un ordinateur.

15. Système pour produire une séquence de vues, comprenant :
un système informatique ayant une architecture client-serveur et comprenant :
au moins un serveur adapté pour recevoir les informations de scénario fournies dans un langage script méta, pour recevoir des informations d'entrée d'utilisateur pour modifier lesdites informations de scénario, pour convertir les informations de scénario fournies dans un langage script méta en commandes de commande pour un dispositif de production d'animation, et transmettre les commandes de commande converties à au moins un dispositif de production d'animation,
au moins un premier client adapté pour fournir des informations de scénario dans un langage script méta audit serveur, et
au moins un second client adapté pour fournir des informations d'entrée d'utilisateur pour modifier lesdites informations de scénario,
au moins un dispositif de production d'animation raccordé audit serveur et étant adapté pour être commandé par lesdites commandes de commande converties, et
au moins un dispositif d'affichage raccordé audit système informatique et étant adapté pour afficher une séquence de vues,
dans lequel le système est adapté pour réaliser le procédé selon l'une quelconque des revendications 1 à 12.
